# FASCICULE DE BREVET EUROPEEN

(11) **EP 3 164 279 B1**
(45) Date de publication et mention de la délivrance du brevet: **02.09.2020**
(21) Numéro de dépôt: 14747966.1
(22) Date de dépôt: 04.07.2014
(51) Int. Cl.: B60H 1/34, B60H 3/02

(54) **DISPOSITIF DE TRAITEMENT D'AIR À ÉLÉMENT(S) PIÉZO-ÉLECTRIQUE(S) À MEMBRANE PERFORÉE, POUR DÉLIVRER DE L'AIR AVEC DES PETITES GOUTTES DE LIQUIDE**
LUFTBEHANDLUNGSVORRICHTUNG MIT PIEZOELEKTRISCHEM ELEMENT(EN) MIT PERFORIERTER MEMBRAN(EN) ZUR ZUFUHR VON LUFT MIT KLEINEN FLÜSSIGKEITSTRÖPFCHEN
AIR TREATMENT DEVICE WITH PIEZOELECTRIC ELEMENT(S) WITH PERFORATED MEMBRANE(S), FOR DELIVERING AIR WITH SMALL DROPS OF LIQUID

(43) Date de publication de la demande: 10.05.2017
(73) Titulaire: PSA Automobiles SA, 78300 Poissy (FR)
(72) Inventeur: DUMUR, Denis, F-78990 Elancourt (FR); PINTAT, Bruno, F-92140 Clamart (FR); KERVAREC, Florian, F-91310 Longpont Sur Orge (FR)
(86) Numéro de dépôt international: PCT/FR2014/051725
(87) Numéro de publication internationale: WO 2016/001492

(56) Documents cités:
- EP-A1- 1 980 433
- WO-A1-2005/053978
- FR-A1- 2 997 753
- JP-A- H08 110 068
- US-A1- 2013 161 423

## Description

L'invention concerne les dispositifs qui sont destinés à traiter de l'air devant alimenter l'enceinte d'un système, et plus particulièrement ceux qui sont destinés à rafraîchir un tel air.

On entend ici par « enceinte » un habitacle de véhicule, éventuellement de type automobile, ou une pièce ou salle d'un bâtiment, ou encore une véranda.

Comme le sait l'homme de l'art, il existe déjà plusieurs solutions permettant de rafraîchir un flux d'air devant alimenter une enceinte. Par exemple, lorsque l'enceinte est un habitacle de véhicule, on peut utiliser une ventilation réfrigérée par nébulisation ou brumisation avec un relais via l'installation de climatisation principale de ce véhicule, ou bien un dispositif de nébulisation ou brumisation comprenant son propre pulseur d'air, éventuellement du type de celui qui est décrit dans les documents brevet FR 10 58448 et FR 12 52288.

Il est rappelé que la nébulisation et la brumisation sont des techniques destinées à produire des (très) petites gouttes de liquide afin de les mélanger à un flux d'air pour donner une impression de fraicheur.

L'inconvénient principal de ces solutions réside dans le fait que les petites gouttes produites sont injectées dans le conduit dans lequel circule le flux d'air en amont de la sortie qui alimente l'enceinte, ce qui induit, à l'intérieur de ce conduit et de l'éventuel aérateur auquel sa sortie peut être couplée, de la condensation et une formation de gouttes. Or, cette condensation interne favorise le développement de bio films et/ou de bactéries et/ou d'algues qui peuvent induire des odeurs nauséabondes dans le flux d'air traité, ce qui contraint à mettre en œuvre des stratégies d'assainissement qui nécessitent généralement l'utilisation de produits désinfectants et donc augmentent sensiblement les coûts de fabrication et d'utilisation. Quant aux gouttes, elles peuvent être emportées par le flux d'air à rafraichir et donc projetées dans l'enceinte, ce qui s'avère désagréable pour les occupants et/ou peut provoquer sur les objets sur lesquels elles se déposent des tâches qui nuisent à la qualité perçue. Par ailleurs, le document EP 1 980 433 divulgue un dispositif de traitement d'air comprenant un élément de type piézoélectrique délivrant des petites gouttes sur une seconde sortie située au voisinage immédiat de la première sortie.

L'invention a donc pour but d'améliorer la situation.

Elle propose notamment à cet effet un dispositif suivant les caractéristiques de la revendication 1.

Les petites gouttes étant désormais mélangées au flux d'air au voisinage de la (première) sortie du conduit dans lequel circule ce flux d'air, elles ne risquent plus d'induire de la condensation interne ou une formation de gouttes, ce qui évite non seulement les désagréments (odeurs nauséabondes et projection de gouttes) mais également la formation de tâches.

Le dispositif de traitement d'air selon l'invention peut comporter d'autres caractéristiques qui peuvent être prises séparément ou en combinaison, et notamment :
- la première sortie peut être équipée d'un aérateur ;
   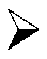 l'aérateur peut comprendre une pièce centrale sensiblement creuse et dans laquelle est logé l'élément. Dans ce cas, la pièce centrale peut
- comprendre des ailettes ;réalisation
- il peut comprendre au moins un réservoir propre à stocker le (un) liquide et auquel est couplé le tuyau ;
- il peut comprendre des moyens de chauffage logés dans le (chaque) réservoir et agencés de manière à chauffer le liquide stocké pendant une durée choisie de manière à l'assainir avant qu'il n'alimente l'élément ;
- il peut comprendre un pulseur propre à fournir le flux d'air au conduit.

L'invention propose également un véhicule, éventuellement de type automobile, et comprenant un habitacle définissant une enceinte et au moins un dispositif de traitement d'air du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe, un premier exemple de réalisation d'un dispositif de traitement d'air selon l'invention fournissant de l'air traité à une partie d'un habitacle, et
- la figure 2 illustre schématiquement, dans une vue en coupe, un second exemple de réalisation d'un dispositif de traitement d'air ne faisant pas partie de l'invention fournissant de l'air traité à une partie d'un habitacle.

L'invention a notamment pour but de proposer un dispositif de traitement d'air D destiné à traiter un flux d'air devant alimenter une partie d'une enceinte H d'un système, par adjonction de petites gouttes de liquide.

On considère dans ce qui suit, à titre d'exemple non limitatif, que l'enceinte H est un habitacle de véhicule automobile, comme par exemple une voiture. Mais l'invention n'est pas limitée à ce type d'enceinte. Elle concerne en effet tout type d'enceinte faisant partie d'un système, et notamment les habitacles de véhicule, quel qu'en soit le type, les pièces ou salles de bâtiments, et les vérandas.

Par ailleurs, on considère dans ce qui suit, à titre d'exemple non limitatif, que le dispositif de traitement d'air D est destiné à être implanté dans une planche de bord d'un véhicule, afin de participer au confort thermique des passagers avant de ce véhicule (au moins). Mais l'invention n'est pas limitée à ce type d'implantation. Ainsi, un dispositif de traitement d'air D peut être également implanté dans un pavillon (ou toit) d'un véhicule, dans une console centrale installée entre deux sièges d'un véhicule, dans un siège d'un véhicule, dans un mur ou un faux plafond d'un bâtiment, ou sur un montant de véranda, par exemple.

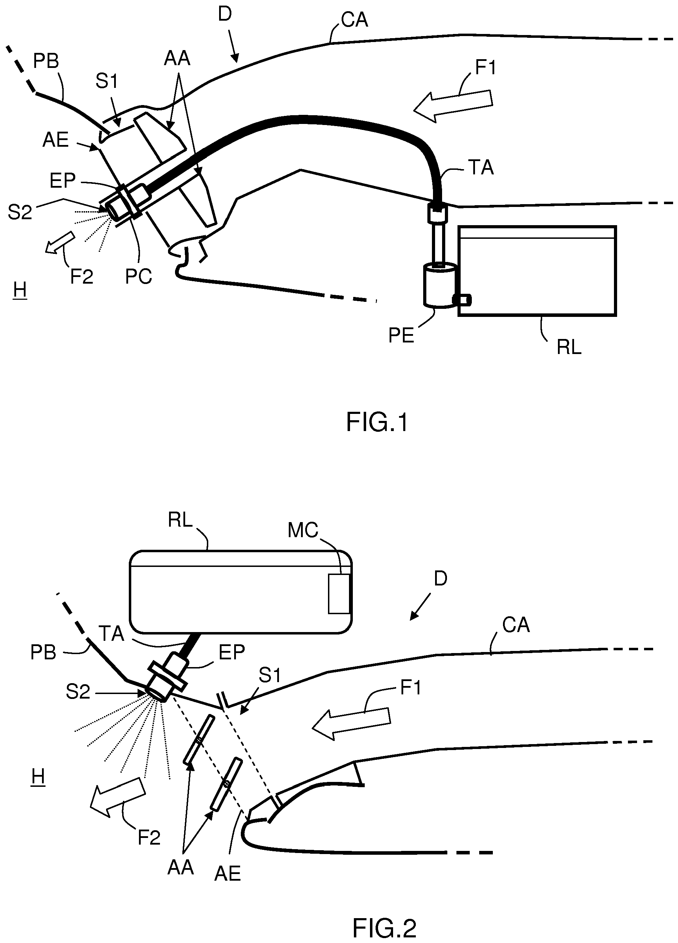

On a schématiquement représenté sur les figures 1 et 2 deux exemples de réalisation d'un dispositif de traitement d'air D, l'exemple de la figure 1 correspondant à l'invention. Comme illustré, un dispositif de traitement d'air D comprend au moins un conduit CA et au moins un élément EP de type piézoélectrique à membrane perforée.

Le (chaque) conduit CA est agencé de manière à permettre la canalisation ou circulation (flèche F1) d'un flux d'air à traiter destiné à alimenter l'enceinte H (ici une partie d'un habitacle de véhicule). Il comprend à cet effet une première sortie S1 qui communique directement ou indirectement avec l'enceinte H.

On notera que dans les exemples de réalisation non limitatifs illustrés sur les figures 1 et 2, le dispositif de traitement d'air D ne comprend qu'un seul conduit CA qui ne comprend qu'une unique première sortie S1 communiquant avec l'enceinte H. Mais il pourrait comporter un seul conduit CA comprenant plusieurs ramifications se terminant respectivement par plusieurs premières sorties S1 communiquant avec l'enceinte H (en plusieurs endroits choisis), ou bien plusieurs conduits comprenant chacun au moins une première sortie S1 communiquant (en un endroit choisi) avec l'enceinte H.

On notera également que dans les exemples de réalisation non limitatifs illustrés sur les figures 1 et 2, le conduit CA communique indirectement avec l'enceinte H via un aérateur (ou dispositif de distribution d'air) AE qui est couplé à sa première sortie S1 (en aval de cette dernière) et à la planche de bord PB et qui comprend, par exemple, une ou plusieurs ailettes AA orientables de manière à permettre le contrôle manuel par un usager de la direction suivant laquelle le flux d'air traité doit pénétrer dans l'enceinte H et/ou le débit de ce flux d'air traité. Mais dans une variante de réalisation la première sortie S1 pourrait communiquer directement avec l'enceinte H.

Le flux d'air qui alimente le (chaque) conduit CA peut, par exemple, être fourni par un pulseur (non représenté) qui fait éventuellement partie du dispositif de traitement d'air D et qui aspire de l'air dans l'habitacle H ou dans le compartiment moteur. Mais dans une variante de réalisation, ce flux d'air pourrait être fourni par une sortie (éventuellement dédiée) d'une installation de chauffage et/ou climatisation faisant partie du système comportant l'enceinte H (ici un véhicule) et chargée de contrôler l'aérothermie de cette enceinte H. L'alimentation en courant de l'éventuel pulseur peut, par exemple, se faire via un câble électrique (non représenté) qui est connecté (ici) au réseau électrique du véhicule. Mais elle pourrait également se faire via une batterie indépendante, comme par exemple une pile.

Comme indiqué plus haut, l'élément (chaque élément) EP est de type piézoélectrique à membrane perforée et propre à être alimenté en liquide par un tuyau TA. Comme le sait l'homme de l'art, ce type d'élément comprend généralement un transducteur piézoélectrique chargé de faire vibrer une membrane perforée soit directement, soit indirectement. Dans la première hypothèse, la membrane perforée peut être entourée par le transducteur piézoélectrique et alimentée en liquide par une entrée qui est couplée au tuyau TA, et alimente une (seconde) sortie S2. Dans la seconde hypothèse, un conduit comprend une entrée couplée au tuyau TA et une (seconde) sortie S2 équipée de la membrane perforée, et le transducteur piézoélectrique est chargé de faire vibrer le conduit en amont de la seconde sortie S2.

Ce type d'élément EP constitue un nébuliseur compact produisant, sous la forme d'un «brouillard» ou d'une «brume», des gouttes de (très) petit diamètre (typiquement compris entre environ 2 µm et environ 30 µm) qui, une fois mélangées à un flux d'air F1, permettent à ce dernier de procurer une sensation de fraicheur à des passagers. La partie vibrante comprend un oscillateur piézoélectrique miniaturisé qui peut, par exemple, vibrer à environ 85 kHz en présence d'une puissance électrique d'environ 1,5 W, afin de faire vibrer la membrane perforée qui reçoit le liquide à nébuliser issu du tuyau TA. La membrane constitue une buse de nébulisation qui présente l'avantage de ne pas goutter lors de l'arrêt de l'alimentation du transducteur.

Par exemple, on peut utiliser un élément EP au moins partiellement similaire à celui fabriqué par la société AEROGEN sous le nom AERONEB® ou bien à celui fabriqué par la société PARI sous le nom EFLOW®Rapid Analyzer.

Les (très) petites gouttes produites sont délivrées sur la seconde sortie S2 qui est située au voisinage immédiat de la première sortie S1 afin que ces petites gouttes soient mélangées au flux d'air F1 qui sort par cette première sortie S1. Ce mélange d'air et de (très) petites gouttes est matérialisé par la flèche F2 sur les figures 1 et 2.

On notera que dans les exemples de réalisation non limitatifs illustrés sur les figures 1 et 2, le dispositif de traitement d'air D ne comprend qu'un seul élément EP du fait qu'il ne comprend qu'une seule première sortie S1. Mais il pourrait comporter plusieurs éléments EP associés respectivement à plusieurs premières sorties S1 communiquant avec l'enceinte H (en plusieurs endroits choisis).

Le liquide qui alimente le (chaque) tuyau TA est issu d'au moins un réservoir RL qui fait éventuellement partie du dispositif de traitement d'air D. Cette alimentation peut se faire soit indirectement au moyen d'une pompe électrique PE, comme dans le premier exemple de réalisation illustré sur la figure 1, soit directement par gravité. Dans la première hypothèse, le (chaque) réservoir RL peut être relativement éloigné de l'élément EP et situé à un niveau supérieur ou inférieur au niveau où est placée l'entrée de ce dernier (EP). En revanche, dans la seconde hypothèse, le (chaque) réservoir RL doit être situé à un niveau supérieur au niveau où est placée l'entrée de l'élément EP pour que l'alimentation par gravité puisse se faire.

Le liquide qui est stocké dans un réservoir RL et qui est destiné à être mélangé au flux d'air F1 pour le rafraîchir peut, par exemple, être de l'eau (de préférence minérale), éventuellement additionnée d'une fragrance destinée à parfumer l'enceinte H ou bien d'un désinfectant destiné à assainir l'enceinte H.

On notera qu'un réservoir RL peut, par exemple, se présenter sous la forme d'un réceptacle que l'on doit remplir régulièrement et/ou qui est alimenté en condensats collectés dans le compartiment moteur du véhicule. Mais il pourrait également s'agir d'une cartouche amovible constituant un consommable et initialement munie d'un opercule d'obturation déchirable ou perforable.

Lorsque plusieurs réservoirs RL sont utilisés pour alimenter en liquide(s) (éventuellement différents) le (chaque) tuyau TA, ce dernier (TA) peut comporter une entrée connectée à un connecteur comprenant une sortie et N entrées couplées à des électrovannes permettant de sélectionner le réservoir RL que l'on souhaite utiliser à l'instant considéré.

L'implantation de la seconde sortie S2 dans le voisinage immédiat de la première sortie S1 peut se concevoir d'au moins deux façons.

Une première façon est illustrée dans le premier exemple de réalisation de la figure 1, qui correspond à l'invention. Dans ce premier exemple, l'élément EP est logé dans le conduit CA avec sa seconde sortie S2 placée en aval, ou au niveau, de la première sortie S1. La notion d'aval doit être ici comprise par rapport au sens de circulation du flux d'air F1.

Comme illustré non limitativement sur la figure 1, l'aérateur AE peut, par exemple, comprendre une pièce centrale PC comprenant une portion sensiblement creuse et dans laquelle est logé l'élément EP. Les petites gouttes sont alors diffusées sensiblement dans l'axe de l'éventuel aérateur AE, ce qui permet d'optimiser le mélange air/liquide et de s'affranchir des risques de condensation.

On notera, comme illustré non limitativement, que cette pièce centrale PC peut éventuellement comprendre les ailettes AA précitées. Dans ce cas, la pièce centrale PC peut être éventuellement entraînée en rotation par un passager afin de permettre le réglage du débit et/ou de la direction.

Sur la figure 1 la seconde sortie S2 est placée en aval de la première sortie S1 mais elle pourrait être placée au niveau de cette dernière (S1).

Une seconde façon est illustrée dans le second exemple de réalisation de la figure 2, qui ne correspond pas à l'invention. Dans ce second exemple, l'élément EP est solidarisé au conduit CA, à l'extérieur de ce dernier (CA) et avec sa seconde sortie S2 placée sensiblement à côté de la première sortie S1 et inclinée par rapport à cette dernière (S1).

Cette inclinaison est destinée à délivrer de façon optimale les petites gouttes dans le flux d'air F1 en aval de la première sortie S1. Elle est par exemple comprise entre environ 20° et environ 70°.

On notera, comme illustré non limitativement sur la figure 2, que le dispositif de traitement d'air D peut également et éventuellement comprendre des moyens de chauffage MC logés dans le (chaque) réservoir RL et agencés de manière à chauffer le liquide stocké pendant une durée choisie de manière à l'assainir avant qu'il n'alimente l'élément EP. Par exemple, ces moyens de chauffage MC peuvent être agencés sous la forme d'au moins une résistance électrique de chauffage (par exemple de type CTP (éventuellement de 20 W pour obtenir un échauffement d'environ 80°)). La durée de fonctionnement de ces moyens de chauffage MC peut être, par exemple, comprise entre environ 30 secondes et environ 2 minutes. Par exemple elle est choisie égale à environ 1 minute.

Cette option de chauffage peut être également envisagée dans le cas du premier exemple de réalisation.

L'invention offre plusieurs avantages, parmi lesquels :
- une optimisation du mélange air/liquide qui permet une meilleure évaporation des petites gouttes et donc un meilleur rendement de rafraîchissement,
- la possibilité d'intégrer l'élément de nébulisation dans un éventuel aérateur, sans risque de génération de condensation,
- la possibilité de positionner l'élément de nébulisation à la périphérie d'un éventuel aérateur afin que les petites gouttes soient délivrées très près du flux d'air à rafraichir,
- une projection de gouttes de nébulisation sans ventilateur complémentaire,
- la possibilité d'utiliser plusieurs réservoirs comportant des liquides différents (avec fragrance(s) ou désinfectant(s)),
- une probabilité nulle de développement de bio films et/ou de bactéries et/ou d'algues dans le conduit d'alimentation en air, ce qui permet d'éviter la mise en œuvre de stratégies d'assainissement.

## Revendications

1. Dispositif de traitement d'air (D) pour une enceinte (H) d'un système, comportant i) au moins un conduit (CA) propre à canaliser un flux d'air à traiter et comportant une première sortie (S1) communiquant avec ladite enceinte (H), et comprenant ii) au moins un élément (EP) de type piézoélectrique, propre à être alimenté en liquide par un tuyau (TA), à produire des petites gouttes à partir de ce liquide et à délivrer ces petites gouttes sur une seconde sortie (S2) située au voisinage immédiat de ladite première sortie (S1), de sorte que lesdites petites gouttes soient mélangées au flux d'air sortant par la première sortie (S1), ledit dispositif étant **caractérisé en ce que** ledit élément (EP) de type piézoélectrique est à membrane perforée, et **en ce que** ledit élément (EP) est logé dans ledit conduit (CA) avec sa seconde sortie (S2) placée en aval, ou au niveau, de ladite première sortie (S1).

2. Dispositif selon la revendication 1, **caractérisé en ce que** ladite première sortie (S1) est équipée d'un aérateur (AE).

3. Dispositif selon la combinaison des revendications 1 et 2, **caractérisé en ce que** ledit aérateur (AE) comprend une pièce centrale (PC) sensiblement creuse et dans laquelle est logé ledit élément (EP).

4. Dispositif selon l'une des revendications 1 à 3, **caractérisé en ce qu'**il comprend au moins un réservoir (RL) propre à stocker ledit liquide et auquel est couplé ledit tuyau (TA).

5. Dispositif selon la revendication 4, **caractérisé en ce qu'**il comprend des moyens de chauffage (MC) logés dans ledit réservoir (RL) et agencés de manière à chauffer ledit liquide stocké pendant une durée choisie de manière à l'assainir avant qu'il n'alimente ledit élément (EP).

6. Dispositif selon l'une des revendications 1 à 5, **caractérisé en ce qu'**il comprend un pulseur propre à fournir ledit flux d'air audit conduit (CA).

7. Véhicule comprenant un habitacle définissant une enceinte (H), **caractérisé en ce qu'**il comprend au moins un dispositif de traitement d'air (D) selon l'une des revendications précédentes.

8. Véhicule selon la revendication 7, **caractérisé en ce qu'**il est de type automobile.

## Patentansprüche

1. Luftbehandlungsvorrichtung (D) für ein Gehäuse (H) eines Systems, mit i) mindestens einer Leitung (CA), die einen zu behandelnden Luftstrom kanalisieren kann und einen ersten Ausgang (S1) aufweist, der mit dem genannten Gehäuse (H) in Verbindung steht, und **dadurch gekennzeichnet, dass** sie ii) mindestens ein Element (EP) vom piezoelektrischen Typ mit einer perforierten Membran aufweist, das durch eine Leitung (TA) mit Flüssigkeit versorgt werden kann, um kleine Tropfen aus dieser Flüssigkeit zu erzeugen und diese kleinen Tropfen an einen zweiten Auslass (S2) zu liefern, der sich in unmittelbarer Nähe des ersten Auslasses (S1) befindet, so dass die kleinen Tropfen mit dem Luftstrom vermischt werden, der durch den ersten Auslass (S1) austritt, und dass das Element (EP) in der Leitung (CA) untergebracht ist, wobei sein zweiter Auslass (S2) stromabwärts oder auf Höhe des ersten Auslasses (S1) angeordnet ist.

2. Vorrichtung nach Anspruch 1, **dadurch gekennzeichnet, dass** der erste Auslass (S1) mit einem Belüfter (AE) ausgestattet ist.

3. Vorrichtung nach der Kombination der Ansprüche 1 und 2, **dadurch gekennzeichnet, daß** der Belüfter (AE) einen im wesentlichen hohlen Mittelteil (PC) aufweist, in dem das Element (EP) untergebracht ist.

4. Vorrichtung nach einem der Ansprüche 1 bis 3, **dadurch gekennzeichnet, dass** sie mindestens einen Behälter (RL) umfasst, der zur Lagerung der Flüssigkeit geeignet ist und an den die Leitung (TA) angeschlossen ist.

5. Vorrichtung nach Anspruch 4, **dadurch gekennzeichnet, dass** sie Heizmittel (MC) umfasst, die in dem Behälter (RL) untergebracht und so angeordnet sind, dass sie die gespeicherte Flüssigkeit während einer Zeitdauer erwärmen, die so gewählt ist, dass sie vor der Speisung des Elements (EP) desinfiziert wird.

6. Vorrichtung nach einem der Ansprüche 1 bis 5, **dadurch gekennzeichnet, dass** sie ein Gebläse umfasst, das geeignet ist, den Luftstrom in die Leitung (CA) zu liefern.

7. Fahrzeug mit einem Fahrgastraum, der einen Raum (H) definiert, **dadurch gekennzeichnet, dass** es mindestens eine Luftbehandlungsvorrichtung (D) gemäß einem der vorhergehenden Ansprüche umfasst.

8. Ein Fahrzeug nach Anspruch 7, **dadurch gekennzeichnet, dass** es vom Automobiltyp ist.

## Claims

1. Air treatment device (D) for an enclosure (H) of a system, comprising i) at least one duct (CA) capable of channelling a flow of air to be treated and comprising a first outlet (S1) communicating with the said enclosure (H), and **characterised in that** it comprises ii) at least one element (EP) of the piezoelectric type with a perforated membrane, capable of being supplied with liquid through a pipe (TA), to produce small drops from this liquid and to deliver these small drops to a second outlet (S2) located in the immediate vicinity of said first outlet (S1), so that said small drops are mixed with the air flow exiting through the first outlet (S1), and **in that** said element (EP) is housed in said duct (CA) with its second outlet (S2) located downstream, or at the level, of said first outlet (S1).

2. Device according to claim 1, **characterized in that** said first outlet (S1) is equipped with an aerator (AE).

3. A device according to the combination of claims 1 and 2, **characterized in that** said aerator (AE) comprises a substantially hollow central part (PC) in which said element (EP) is housed.

4. Device according to one of claims 1 to 3, **characterized in that** it comprises at least one tank (RL) suitable for storing said liquid and to which said pipe (TA) is coupled.

5. A device according to claim 4, **characterized in that** it comprises heating means (MC) housed in said reservoir (RL) and arranged so as to heat said stored liquid for a period of time chosen so as to sanitize it before it feeds said element (EP).

6. Device according to one of claims 1 to 5, **characterized in that** it comprises a blower suitable for supplying said air flow to said duct (CA).

7. Vehicle comprising a passenger compartment defining an enclosure (H), **characterized in that** it comprises at least one air treatment device (D) according to one of the preceding claims.

8. A vehicle according to claim 7, **characterised in that** it is of the automotive type.
